# EUROPEAN PATENT SPECIFICATION

(11) **EP 2 718 335 B1**
(45) Date of publication and mention of the grant of the patent: **22.01.2020**
(21) Application number: 12725390.4
(22) Date of filing: 01.06.2012
(51) Int. Cl.: C08F 10/00, C08F 4/649

(54) **PRE-POLYMERIZED CATALYST COMPONENTS FOR THE POLYMERIZATION OF OLEFINS**
VORPOLYMERISIERTE KATALYSATORKOMPONENTEN ZUR OLEFINPOLYMERISATION
COMPOSANTS DE CATALYSEUR PRÉ-POLYMÉRISÉS POUR LA POLYMÉRISATION D'OLÉFINES

(30) Priority: 09.06.2011 EP 11169338; 10.06.2011 US 201161495586 P
(43) Date of publication of application: 16.04.2014
(73) Proprietor: Basell Poliolefine Italia S.r.l., 20121 Milano (IT)
(72) Inventor: LIGUORI, Dario, I-44122 Ferrara (IT); DALL'OCCO, Tiziano, I-44121 Ferrara (IT); VITALE, Gianni, I-44122 Ferrara (IT); PATER, Joachim T. M., I-44020 Ferrara (IT); MORINI, Giampiero, I-44122 Ferrara (IT)
(74) Representative: Giberti, Stefano
(86) International application number: PCT/EP2012/060325
(87) International publication number: WO 2012/168140

(56) References cited:
- EP-A1- 2 014 687
- EP-A1- 2 452 956
- WO-A1-02/38621
- WO-A1-99/24479
- WO-A2-01/85803
- WO-A2-2009/045043
- JP-A- 4 202 510
- JP-A- 9 328 515
- JP-A- 2007 106 939
- JP-B- 3 279 349
- US-A1- 2008 182 950
- DATABASE CA [Online] CHEMICAL ABSTRACTS SERVICE, COLUMBUS, OHIO, US; YU, EUI-YEON ET AL: "The effects of prepolymerization on propylene polymerization with Mg(OC2H5)2 supported catalyst", XP8155295, retrieved from STN Database accession no. 1996:403575

## Description

The present invention relates to catalyst components for the preparation of ethylene (co)polymers by using gas-phase, slurry or bulk (co)polymerization processes.

High-yield catalyst components for the polymerization of olefins and in particular for ethylene are known in the art. They are generally obtained by supporting, on a magnesium dihalide, a titanium compound normally chosen from titanium halides alkoxide and haloalcoholates. Said catalyst components are then used together with an aluminum alkyl compound in the polymerization of ethylene. This kind of catalyst components, and the catalysts obtained therefrom, are largely used in the plants for the (co)polymerization of ethylene both operating in liquid phase (slurry or bulk) and in gas-phase. However, the use of the catalyst components as such is not completely satisfactory. Indeed, due to the high reactivity of the ethylene, the kinetic of the polymerization reaction is very high. As a consequence, the catalyst is subject to a very strong tension during the initial stage of polymerization which can cause the uncontrolled breakage of the catalyst itself. This event is the cause of the formation of fine particles of polymer, which, in turn, leads to low bulk density of the polymer and to operating process difficulties.

In the attempt to solve these problems, the catalyst is pre-polymerized under controlled conditions, so as to obtain pre-polymerized catalysts purposed to have good morphology. In fact, it is believed that after the pre-polymerization, the catalysts increase their resistance in such a way that the tendency to break under polymerization conditions is decreased. As a consequence the formation of fine particles would be reduced and the overall bulk density improved. Typically, the catalysts are prepolymerized with the same olefin which is then polymerized in the main polymerization step. Therefore, the non-stereospecific catalysts used for ethylene polymerization are often pre-polymerized with ethylene. The pre-polymerization with ethylene of a non-stereospecific catalyst however does not fully solve the problems mentioned before. In USP 4,325,837 for example, as it is apparent from table 14A and 14B, the use of a non-stereospecific catalyst pre-polymerized with ethylene to an extent of lower than 50% b.w., based on the weight of the total pre-polymerized catalyst, is not always satisfactory because the yields and the morphological properties of the polymer produced with the pre-polymerized catalyst are in certain cases lower than that of the non-pre-polymerized one. In the same patent it is said (column 37 lines 57-60) that the use of a pre-polymerized catalyst is of no advantage with respect to the non pre-polymerized one. In addition to these problems, it must be noted that in view of the very high reactivity of ethylene the pre-polymerization with this monomer can give some difficulties in keeping the mild conditions that are generally used in the pre-polymerization in order to reach the desired properties of the catalyst. Moreover, the ethylene pre-polymerized catalyst also shows a reduced hydrogen response with respect to the non-prepolymerized catalysts.

On the other hand, some documents disclose the prepolymerization of prochiral olefin monomers using sterospecific catalysts. In particular, JP2007-106939 and JP-3-279349 B describe prepolymerization of aromatic monomers only in combination with stereospecific solid catalyst components to be used in propylene polymerization for preparing polypropylene with high stereoregularity. In order to meet this goal, all the disclosed catalyst components contain substantial amounts of stereoregulating donor such as phthalates or alkoxyesters.

WO01/85803 describes that by the pre-polymerization of a non stereospecific catalyst with prochiral monomers it would be possible to obtain a catalyst for the polymerization of olefins capable to produce polymers with high bulk density and that has an activity which is higher than that of the original non pre-polymerized catalyst. However, the described pre-polymerized catalyst, although of interest under certain polymerization conditions, does not show an acceptable morphological stability under polymerization carried out under drastic conditions such as those carried out in the presence of high amount of hydrogen in order to prepare ethylene polymers with low molecular weight. Moreover, it has been noticed that the propylene prepolymerized catalyst tends to form a too high amount of aggregates of particles that have to be removed in order to have a homogeneous lot with a consequent loss of material. In addition, although better than that of the ethylene prepolymerized catalyst, the hydrogen response of the propylene prepolymerized catalyst should be improved.

It has now surprisingly been found that a non stereospecific catalyst prepolymerized with a specific type of monomers results in a prepolymerized catalyst showing an excellent balance in terms of activity, morphological stability, reduced tendency to agglomeration and hydrogen response.

It is therefore an object of the present invention a pre-polymerized catalyst component for the polymerization of olefins CH₂=CHR, wherein R is hydrogen or a C₁-C₁₂ hydrocarbon group, characterized by comprising a non-stereospecific solid catalyst component, comprising Ti, Mg and a halogen, said pre-polymerized catalyst component containing an amount of a (co)polymer of a monomer CH₂=CHA selected from styrene, 4-Cl-styrene, alpha methylstyrene, and divinylbenzene, ranging from 0.1 up to 5g per g of said solid catalyst component.

According to the present invention the term "non-stereospecific solid catalyst component" means a solid catalyst component that gives, under the standard polymerization conditions described below, a propylene homopolymer having an insolubility in xylene at 25°C lower than 55% and preferably lower than 50%.

Preferably the amount of the CH₂=CHA based (co)polymer ranges from 0.1 up to less than 2 g and more preferably said amount is up to less than 1 g per g of solid catalyst component. In a particularly preferred embodiment said amount is from 0.1 to 0.9 g per g of solid catalyst component.

Preferably the catalyst component of the present invention comprises a titanium compound and a magnesium dihalide. The magnesium halides, preferably MgCl₂, in active form used as a support for Ziegler-Natta catalysts, are widely known from the patent literature. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is broadened to form a halo.

The preferred titanium compounds used in the catalyst component of the present invention are those of formula Ti(OR^{II})_{n-y}X_{y}, where R^{II} is a C1-C20 hydrocarbon group X is halogen, n is the valence of titanium and y is a number between 1 and n. Particularly preferred compounds are TiCl₄, TiCl₃ and Ti-tetraalcoholates or Ti-chloroalcoholates of formula Ti(OR^{III})ₐClₙ₋ₐ where n is the valence of titanium, a is a number comprised between 1 and n, and R^{III} is a C1-C8 alkyl or aryl group. Preferably R^{III} is selected from ethyl, propyl, n-butyl, isobutyl, 2-ethylhexyl, n-octyl and phenyl.

The titanium compound can be pre-formed, or it is produced in-situ by the reaction of a titanium tetrahalide, in particular TiCl₄, with alcohols R^{II} OH or with titanium alkoxides having the formula Ti(OR^{II})₄ where R^{II} has the meaning defined above.

Preferably, more than 50%, more preferably more than 70% and especially more than 90% of the titanium atoms are in the 4⁺ valence state.

The solid catalyst components may in principle comprise an electron donor compound (internal donor), selected among ethers, esters, amines and ketones. However, as already explained, the solid catalyst component must be non stereospecific according to the definition already given and according to the text reported in the characterization section. Therefore, if present the electron donor compound should either not have stereoregulating ability or be present in such an amount that it does not provide sufficient stereoregulating ability to the catalyst. As a general indication the electron donor compound could be present only in amount such as to give ED/Ti ratios lower than 0.5, preferably lower than 0.3 and more preferably lower than 0.1. The solid catalyst component not including any amount of electron donor compound is the most preferred. Depending on the preparation process, the final catalyst component may also contain aluminum atoms. In such a case, the Mg/Al molar ratio can range from 1 to 35, preferably from 3 to 30, more preferably from 4 to 20 and most preferably in the range 4-16. When present, the amount of Al is typically higher than 0.5%wt., preferably higher than 1% and more preferably in the range of from 1.2-3.5%. Preferably, the amount of Al is lower than that of Ti.

The aluminum may derive from compounds of formula AlClM₂ where M can be, independently, OR¹ groups as defined above or Cl. Preferably the aluminum halide is an aluminum chloride.

In addition to the above mentioned characteristics the solid catalyst component (a) may show a porosity P_{F} determined with the mercury method higher than 0.40 cm³/g and more preferably higher than 0.50 cm³/g usually in the range 0.50-0.80 cm³/g. The total porosity P_{T} can be in the range of 0.50-1.50 cm³/g, particularly in the range of from 0.60 and 1.20 cm³/g, and the difference (P_{T}-P_{F}) can be higher than 0.10 preferably in the range from 0.15-0.50.

The surface area measured by the BET method is preferably lower than 80 and in particular comprised between 10 and 70 m²/g. The porosity measured by the BET method is generally comprised between 0.10 and 0.50, preferably from 0.10 to 0.40 cm³/g.

Preferably, in the catalyst component of the invention the average pore radius value, for porosity due to pores up to 1µm, is in the range from 650 to 1200 Ǻ.

The particles of solid component have substantially spherical morphology and average diameter comprised between 5 and 150 µm, preferably from 20 to 100 µm and more preferably from 30 to 90 µm. As particles having substantially spherical morphology, those are meant wherein the ratio between the greater axis and the smaller axis is equal to or lower than 1.5 and preferably lower than 1.3.

A method suitable for the preparation of spherical components mentioned above comprises a step (a) in which a compound MgCl₂.mR^{III}OH, wherein 0.3 ≤ m ≤ 1.7 and R^{III} is an alkyl, cycloalkyl or aryl radical having 1-12 carbon atoms is reacted with the said titanium compound of the formula Ti(OR^{I})ₙX₄₋ₙ, in which n, y, X and R^{I} have the same meaning as already defined.

In this case MgCl₂.mR^{III}OH represents a precursor of Mg dihalide. These kind of compounds can generally be obtained by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034. Adducts having the desired final alcohol content can be obtained by directly using the selected amount of alcohol directly during the adduct preparation. However, if adducts with increased porosity are to be obtained it is convenient to first prepare adducts with more than 1.7 moles of alcohol per mole of MgCl₂ and then subjecting them to a thermal and/or chemical dealcoholation process. The thermal dealcoholation process is carried out in nitrogen flow at temperatures comprised between 50 and 150°C until the alcohol content is reduced to the value ranging from 0.3 to 1.7. A process of this type is described in EP 395083.

Generally these dealcoholated adducts are also characterized by a porosity (measured by mercury method) due to pores with radius due to pores with radius up to 0.1µm ranging from 0.15 to 2.5 cm³/g preferably from 0.25 to 1.5 cm³/g.

In the reaction of step (a) the molar ratio Ti/Mg is stoichiometric or higher; preferably this ratio in higher than 3. Still more preferably a large excess of titanium compound is used. Preferred titanium compounds are titanium tetrahalides, in particular TiCl₄. The reaction with the Ti compound can be carried out by suspending the adduct in cold TiCl₄ (generally 0°C); the mixture is heated up to 80-140°C and kept at this temperature for 0.5-8 preferably from 0.5 to 3 hours. The excess of titanium compound can be separated at high temperatures by filtration or sedimentation and siphoning.

According to variance of the method, the step (a) is carried out in the presence of an aluminum compound of formula AlCl₂M where M can be, independently, OR¹ as already defined or chlorine.

The aluminum compound, preferably AlCl₃, which is used in amounts such as to have Mg/Al molar ratio can range from 1 to 35, preferably from 3 to 30, more preferably from 4 to 20 and most preferably in the range 4-16.

As explained above, the pre-polymerized catalyst component can be obtained by pre-polymerizing the solid catalyst component together with the CH₂=CHA monomer selected from monomer selected from styrene, 4-Cl-styrene, alpha methylstyrene, and divinylbenzene, preferably styrene, in the optional presence of other olefins. In particular this means that the said CH₂=CHA monomer may be prepolymerized alone or in the simultaneous presence of other olefins to form copolymers. As a further possibility, the CH₂=CHA monomer selected from styrene, 4-Cl-styrene, alpha methylstyrene, or divinylbenzene and the other olefin(s) may be prepolymerized in sequence so as to form combinations of different polymers. The other olefin(s) may be chosen from those of formula CH₂=CHR, wherein R is hydrogen or a C₁-C₁₂ alkyl group. Among them, preferred are ethylene, propylene, 1-butene, 4-methyl-1-pentene, 1-hexene. Propylene, particularly when used sequentially with styrene is the most preferred.

The pre-polymerization is normally carried out in the presence of an Al-alkyl compound. The alkyl-Al compound (B) is preferably chosen among the trialkyl aluminum compounds such as for example triethylaluminum, triisobutylaluminum, tri-n-butylaluminum, tri-n-hexylaluminum, tri-n-octylaluminum. Use of tri-n-octylaluminum is particularly preferred. It is also possible to use mixtures of trialkylaluminum's with alkylaluminum halides, alkylaluminum hydrides or alkylaluminum sesquichlorides such as AlEt₂Cl and Al₂Et₃Cl₃.

It has been found particularly advantageous to carry out said pre-polymerization using low amounts of alkyl-Al compound. In particular said amount could be such as to have an Al/Ti molar ratio from 0.01 to 50, preferably from 0.01 to 10 and more preferably from 0.05 to 2.5. The pre-polymerization can be carried out in liquid phase, (slurry or solution) or in gas-phase at temperatures ranging from 20 to 100°C, preferably ranging from 30 and 90°C and more preferably ranging from 30 and 70°C. Furthermore, it is preferably carried out in a liquid diluent in particular selected from liquid hydrocarbons. Among them, pentane, hexane and heptane are preferred.

As explained, the so obtained pre-polymerized catalyst components can be used in the (co)polymerization of ethylene, allowing to obtain, with high yields, polymers with regular morphology. In addition, as they show an increased hydrogen response, they would be able to produce polyethylene with the targeted melt index using a lower amount of hydrogen as a chain transfer agent. Since hydrogen has also a depressive effect on catalyst activity, using less hydrogen is expected to result in a higher polymerization activity.

The catalysts of the invention can be used in any of the olefin polymerization processes known in the art. They can be used for example in slurry polymerization using as diluent an inert hydrocarbon solvent or bulk polymerization using the liquid monomer (for example propylene) as a reaction medium. Moreover, they can also be used in the polymerization process carried out in gas-phase. The gas-phase process can be carried out in a fluidized or stirred, fixed bed reactor or in a gas-phase reactor comprising two interconnected polymerization zones one of which, working under fast fluidization conditions and the other in which the polymer flows under the action of gravity.

In particular, the catalysts of the invention are endowed with features that render them particularly suitable for the liquid (bulk or slurry) and gas-phase polymerization processes. They can be used in polymerization plant set-up including or not a pre-polymerization section. In fact, since the catalysts have no aging problems they can be also pre-polymerized in a batch scale and then used in liquid or gas-phase olefin polymerization plants operating without a pre-polymerization line.

In particular, said ethylene (co)polymerization processes can be carried out in the presence of a catalyst comprising (A) the pre-polymerized catalyst component above described and (B) an Al-alkyl compound of the type described above. In the main polymerization process the amount of Al is higher than that used in the prepoly. Preferably, the Al compound is used in an amount such that the Al/Ti ratio is higher than 1 and is generally comprised between 20 and 800.

The above described polymerization process can be carried out under the polymerization conditions generally known in the art. Accordingly, the polymerization is generally carried out at temperature of from 20 to 120°C, preferably of from 40 to 80°C.

In any of the polymerization processes used (liquid or gas-phase polymerization) the catalyst forming components (A) and (B) can be pre-contacted before adding them to the polymerization reactor. Said pre-contacting step can be carried out in the absence of polymerizable olefin or optionally in the presence of said olefin in an amount up to 3 g per g of solid catalyst component. The catalyst forming components can be contacted with a liquid inert hydrocarbon solvent such as propane, n-hexane, or n-heptane at a temperature below 60°C and preferably from 0°C to 30°C for a time period of from 10 seconds to 60 minutes.

The above process is suitable for the preparation of wide range of polyethylene products. As an example, the following products can be prepared: high density ethylene polymers (HDPE, having a density higher than 0.940 g/cm³), comprising ethylene homopolymers and copolymers of ethylene with α-olefins having 3-12 carbon atoms; linear low density polyethylenes (LLDPE, having a density lower than 0.940 g/cm³) and very low density and ultra low density (VLDPE and ULDPE, having a density lower than 0.920 g/cm³, to 0.880 g/cm³) consisting of copolymers of ethylene with one or more α-olefins having from 3 to 12 carbon atoms, having a mole content of units derived from the ethylene higher than 80%;

The following examples are given in order better illustrate the invention without limiting it.

### EXAMPLES

### Characterization

The properties are determined according to the following methods:
MIE flow index: ASTM-D 1238 condition E
Determination of Mg: has been carried out via inductively coupled plasma emission spectroscopy (ICP) on a "I.C.P SPECTROMETER ARL Accuris".

The sample was prepared by analytically weighting, in a "fluxy" platinum crucible", 0.1÷03 grams of catalyst and 3 grams of lithium metaborate/tetraborate 1/1 mixture. The crucible is placed on a weak Bunsen flame for the burning step and then after addition of some drops of KI solution inserted in a special apparatus "Claisse Fluxy" for the complete burning. The residue is collected with a 5% v/v HNO₃ solution and then the magnesium was analyzed via ICP at a wavelength of 279.08 nm.

### Average Particle Size of the adduct and catalysts

The particle size distribution of the solid components is determined by a method based on the principle of the optical diffraction of monochromatic laser light with the "Malvern Mastersizer 2000" apparatus. The average particle size is given as P50.

### General procedure for the standard propylene polymerization test

A 4 liter steel autoclave equipped with a stirrer, pressure gauge, thermometer, catalyst feeding system, monomer feeding lines and thermostating jacket, was used. The reactor was charged with 0.01 g of solid catalyst component and with 6.6 mmoles of TEAL. Moreover, 1.6 kg of propylene, and 1.5 NL of hydrogen were added. The system was heated to 70°C over 10 min. under stirring, and maintained under these conditions for 120 min. At the end of the polymerization, the polymer was recovered by removing any non-reacted monomers and was dried under vacuum.

### Procedure for the preparation of the spherical support (adduct of MgCl₂/EtOH)

A magnesium chloride and alcohol adduct was prepared following the method described in Example 2 of USP 4,399,054, but working at 2000 RPM instead of 10000 RPM. The adduct containing about 3 mols of alcohol and about 2.5%wt of H₂O and had an average size of about 55 µm. The adduct was subject to a thermal treatment, under nitrogen stream, over a temperature range of 50-150 °C until a weight content of 25% of alcohol was reached.

### Procedure for the preparation of an intermediate solid component

Into a 2 L reaction vessel, purged with nitrogen, 1 L of TiCl₄ was introduced at 0°C. Then, at the same temperature, 70 grams of a spherical MgCl₂/EtOH adduct containing 25%wt of ethanol, prepared as described above, were added under stirring.

The temperature was raised to 140°C in 2 hours and maintained for 60 min. Then, the stirring was discontinued, the solid product was allowed to settle and the supernatant liquid was siphoned off.

The solid residue was then washed once with heptane at 80°C and five times with hexane at 25°C and dried under vacuum at 30°C and analyzed. The spherically shaped solid has a magnesium content of 18.2%wt, and an average particle size (P50) of 49 micron.

The intermediate solid component was tested in propylene polymerization, using the general method described here above. The polymer obtained from that test, has a xylene insoluble fraction of 48.1%wt.

### Ethylene polymerization at high hydrogen concentration

A 4.5-liter stainless-steel autoclave equipped with a magnetic stirrer, temperature and pressure indicator, feeding line for hexane, ethylene, and hydrogen, was used and purified by fluxing pure nitrogen at 70°C for 60 minutes. Then, a solution of 1550 cm³ of hexane containing 1.0 cm³ of 10 % by wt/vol TiBAL/hexane was introduced at a temperature of 30°C under nitrogen flow. In a separate 200 cm³ round bottom glass bottle were successively introduced, 50 cm³ of anhydrous hexane, an amount of TIBAL in hexane solution equivalent to 3.9 mmoles of TIBAL, and 0.040÷0.070 grams of the solid catalyst. They were mixed together, aged 10 minutes at room temperature and introduced under nitrogen flow into the reactor. The autoclave was closed, then the temperature was raised to 85°C, hydrogen (9 bars partial pressure) and ethylene (3 bars partial pressure) were added.

Under continuous stirring, the total pressure was maintained at 85°C for 120 minutes by feeding ethylene. At the end the reactor was depressurized and the temperature was dropped to 30°C. The recovered polymer was dried at 70°C under a nitrogen flow and analyzed. The obtained results are reported in Table 2.

### Method for evaluation of the polymer morphology:

A visual inspection is done on microscopy pictures of the polymer particles:
- When many agglomerates are present, or the product is mainly not spherical, this is indicated in the morphology description with the term "agglomerates"
- When the product is spherical, but an important part of the polymer is broken, the morphology is indicated as "spheres, +"
- When the product is spherical, the spheres have somewhat irregular surfaces, and some fines are present, the morphology is indicated as "spheres, + +"
- When the product is spherical, the spheres have smooth regular surfaces, and no fines are present, the morphology is indicated as "spheres, + + +"

### EXAMPLES

In the below described examples several solid pre-polymerized catalyst components were prepared by pre-polymerization of the intermediate solid catalyst component described above. The obtained components were analyzed for their composition; the results are listed in Table 1. Furthermore, the components were used in polymerization tests, using the above described polymerization procedure. The results of the polymerizations are shown in Table 2 below.

### Example 1 - Prepolymerization of solid component with ethylene

Into a 1 L reaction vessel, purged with nitrogen and equipped with thermometer and agitator, 25 grams of the intermediate solid component prepared as described above, are suspended in 500 mL i-hexane at 10°C. A solution of trioctyl aluminum solution in hexane is added, such to obtain a molar ratio between the aluminum and the titanium present on the solid component of 0.5 molar. The suspension is kept at 10°C for 30 minutes, while agitating. After this preactivation step, 6.3 grams of ethylene are fed into the reaction vessel with a continuous flow, over a 2 hours time period. The mixture is then agitated for another 30 minutes after completion of the monomer feeding.

After this time, agitation was stopped, and the solid was allowed to settle. The supernatant liquid was siphoned off, and fresh i-hexane was added. Agitation was started again to wash the solid at ambient temperature. Agitation was stopped again, solid was allowed to settle, and liquid was siphoned off. Subsequently, the solid was dried under vacuum at 30°C and analyzed. Some characteristics of the pre-polymerized catalyst, including the conversion in terms of amount of pre-polymer formed per gram of initial catalyst (calculated from magnesium content of the solid before and after pre-polymerization), are reported in Table 1.

### Example 2 - Prepolymerization of solid component with ethylene

Example 1 was repeated, but now, 14 grams of ethylene were fed over a 3 hours time period.

### Example 3 - Prepolymerization of solid component with ethylene

Example 1 was repeated, but now, 27.5 grams of ethylene were fed over a 6 hours time period.

### Example 4 - Prepolymerization of solid component with propylene

Example 1 was repeated, but now, 7.5 grams of propylene were fed i a 2 hours time period.

### Example 5 - Prepolymerization of solid component with propylene

Example 4 was repeated, but now, 17.5 grams of propylene were fed over a 3 hours time period.

### Example 6 - Prepolymerization of solid component with propylene

Example 4 was repeated, but now, 35.3 grams of propylene were fed over a 6 hours time period.

### Examples 7-9 - Prepolymerization of solid component with styrene

Into a 1 L reaction vessel, purged with nitrogen and equipped with thermometer and agitator, 35 grams of the intermediate solid component prepared as described above, are suspended in 500 mL i-hexane at ambient temperature. A solution of trioctyl aluminum solution in hexane is added, such to obtain a molar ratio between the aluminum and the titanium present on the solid component of 0.5 molar. The suspension is heated to 50°C and kept at that temperature for 30 minutes, while agitating. After this preactivation step, styrene is added drop wise to the reaction vessel in such an amount to meet the monomer/catalyst ratio that is indicated in Table 1. After monomer addition, the vessel is agitated for 4 hours and kept at 50°C.

After this time, agitation was stopped, and the solid was allowed to settle. The supernatant liquid was siphoned off, and fresh i-hexane was added. Agitation was started again to wash the solid at ambient temperature. Agitation was stopped again, solid was allowed to settle, and liquid was siphoned off. Subsequently, the solid was dried under vacuum at 30°C and analyzed.

Some characteristics of the prepolymerized catalyst, including the conversion in terms of amount of prepolymer formed per gram of initial catalyst (calculate from magnesium content of the solid before and after prepolymerization), are reported in Table 1.

### Examples 10-14 - Prepolymerization of solid component with other monomers

The procedure described for Examples 7-9 was repeated with 28 grams of different types of monomers. The monomers are indicated in Table 1.

### Example 14 - Polymerization of ethylene with intermediate solid component

The general procedure for polymerization of ethylene was applied, using the intermediate solid component, prepared as described above. The performance in polymerization, as well as the characteristics of the obtained polymer, is indicated in Table 2. The yield as indicated in the Table 2, is expressed as amount of polymer formed in polymerization per amount of original (neat) catalyst present in the prepolymer.

### Examples 15-27 - Polymerization of ethylene with prepolymerized catalysts

The general procedure for polymerization of ethylene was applied, using the above exemplified prepolymerized catalysts. The prepolymer used, the performance in polymerization, as well as the characteristics of the obtained polymer, are indicated in Table 2. The yield as indicated in the Table 2, is expressed as amount of polymer formed in polymerization per amount of original (neat) catalyst present in the prepolymer.

### Examples 28 - Prepolymerization of solid component with propylene and styrene

Into a 1 L reaction vessel, purged with nitrogen and equipped with thermometer and agitator, 24.2 grams of the intermediate solid component prepared as described above, are suspended in 500 mL i-hexane at ambient temperature. A solution of trioctyl aluminum solution in hexane is added, such to obtain a molar ratio between the aluminum and the titanium present on the solid component of 0.6 molar. The suspension is cooled to 10°C and kept at that temperature for 30 minutes, while agitating. After this preactivation step, 17 grams of propylene are fed into the reaction vessel with a continuous flow, over a 2 hours time period. The mixture is then agitated for another 30 minutes after completion of the monomer feeding, then the reactor was degassed and 18.7 ml of styrene are added drop wise to the reaction vessel. The reactor vessel was then wormed up to 50°C and kept under continuous stirring for 2 hours at 50°C.

After this time, agitation was stopped, and the solid was allowed to settle. The supernatant liquid was siphoned off, and fresh i-hexane was added. Agitation was started again to wash the solid at ambient temperature. Agitation was stopped again, solid was allowed to settle, and liquid was siphoned off. Subsequently, the solid was dried under vacuum at 30°C and analyzed.

Some characteristics of the prepolymerized catalyst, including the conversion in terms of amount of prepolymer formed per gram of initial catalyst (calculate from magnesium content of the solid before and after prepolymerization), are reported in Table 1.

### Examples 29 - Polymerization of ethylene with prepolymerized catalysts

The general procedure for polymerization of ethylene was applied, using the above exemplified prepolymerized catalysts. The prepolymer used, the performance in polymerization, as well as the characteristics of the obtained polymer, are indicated in Table 2. The yield as indicated in the Table 2, is expressed as amount of polymer formed in polymerization per amount of original (neat) catalyst present in the prepolymer.

**Table 1 Prepolymerized solid catalyst components**

| **Example** | **Monomer fed** | | **Mg** | **P50** | **Conversion (Mg based)** | **Prepolymer appearance** |
|---|---|---|---|---|---|---|
| | **type** | **g/g** | **wt%** | **µm** | **g/g** | |
| 1 (comparative) | | 0.25 | 15.0 | - ¹⁾ | 0.22 | agglomerated |
| 2 (comparative) | C2 | 0.56 | 11.9 | 63 ²⁾ | 0.53 | Partially aggl. |
| 3 (comparative) | | 1.1 | 8.2 | 76 ²⁾ | 1.08 | Partially aggl. |
| 4 (comparative) | | 0.3 | 15.4 | 54 | 0.18 | spherical |
| 5 (comparative) | C3 | 0.7 | 11.8 | 66 | 0.55 | spherical |
| 6 (comparative) | | 1.4 | 9.3 | 73 | 0.96 | spherical |
| 7 (inventive) | | 0.2 | 14.8 | 50 | 0.19 | spherical |
| 8 (inventive) | STY | 0.5 | 11.6 | 49 | 0.53 | spherical |
| 9 (inventive) | | 0.8 | 9.7 | 52 | 0.78 | spherical |
| 10 (inventive) | DVB | 0.8 | 11.5 | 53 | 0.53 | spherical |
| 11 (inventive) | STY/DV | 0.8 | 10.0 | 55 | 0.79 | spherical |
| 12 (inventive) | 4CS | 0.8 | 13.1 | 50 | 0.35 | spherical |
| 13 (comparative) | VCH | 0.8 | 11.9 | 58 ²⁾ | 0.52 | partially agglomerated |
| 28 (inventive) | C3/STY | 1.5 | 8.5 | 66 | 1.19 | spherical |

| | | | | | | |
|---|---|---|---|---|---|---|
| C2 ethylene C3 propylene STY styrene DVB divinyl benzene STY/DVB styrene / divinyl benzene mixture (9/1 molar ratio) 4CS 4-chloro styrene VCH vinyl cyclohexane 1) Prepolymer is heavily agglomerated; no PSD measurement possible 2) Prepolymer is partially agglomerated; PSD measurement possible after 30' ultrasound treatment | | | | | | |

**Table 2 Results of polymerization experiments with catalysts**

| **Example** | **Catalyst component** | **Yield kgPE/gcat** | **MI E dg/min** | **Morphology** |
|---|---|---|---|---|
| 14 | | 9.6 | 100 | non spherical product |
| 15 | 1 | 1.7 | 91 | agglomerates |
| 16 | 2 | 3.6 | 51 | spheres, + + + |
| 17 | 3 | 3.9 | 77 | spheres, + + |
| 18 | 4 | 4.6 | 130 | spheres, + + + |
| 19 | 5 | 6.5 | 110 | spheres, + |
| 20 | 6 | 5.7 | 68 | spheres, + |
| 21 | 7 | 6.8 | 182 | spheres, + + |
| 22 | 8 | 5.2 | 245 | spheres, + + |
| 23 | 9 | 5.1 | 203 | spheres, + + |
| 24 | 10 | 4.3 | 113 | spheres, + + |
| 25 | 11 | 5.9 | 148 | spheres, + + |
| 26 | 12 | 7.4 | 140 | spheres, + + |
| 27 | 13 | 6.2 | 140 | spheres, + |
| 29 | 28 | 11.8 | 145 | spheres, + + |

## Claims

1. A pre-polymerized catalyst component for the polymerization of olefins CH₂=CHR, wherein R is hydrogen or a C₁-C₁₂ hydrocarbon group, **characterized by** comprising a non-stereospecific solid catalyst component, comprising Ti, Mg and a halogen, said pre-polymerized catalyst component containing an amount of a (co)polymer of a monomer CH₂=CHA selected from styrene, 4-Cl-styrene, alpha methylstyrene, and divinylbenzene, ranging from 0.1 up to 5g per g of said solid catalyst component wherein said non stereospecific solid catalyst component gives, under the standard propylene polymerization conditions described in the "general procedure for the standard propylene polymerization" section of the description, a propylene homopolymer having an insolubility in xylene at 25°C lower than 55%.

2. The pre-polymerized catalyst component according to claim 1 in which the amount of the CH₂=CHA polymer is less than 2 g per g of said solid catalyst component.

3. The pre-polymerized catalyst component according to claim 2 in which the amount of the CH₂=CHA polymer is from 0.1 to 0.9 g per g of solid catalyst component.

4. The pre-polymerized catalyst component according to claim 1 comprising a titanium compound and a magnesium dihalide.

5. The pre-polymerized catalyst component according to claim 1 in which the magnesium dihalide is magnesium dichloride and the titanium compound is selected from the compounds of formula Ti(OR)_{n-y}X_{y}, where R is a C1-C20 hydrocarbon group X is halogen, n is the valence of titanium and y is a number between 1 and n.

6. The pre-polymerized catalyst component according to any of the preceding claims not containing an electron donor.

7. A catalyst system for the polymerization of olefins comprising the product obtained by contacting (A) a pre-polymerized catalyst component according to any of the preceding claims; and (B) an Al-alkyl compound.

8. A process for the (co)polymerization of ethylene **characterized in that** it is carried out in the presence of a catalyst comprising (A) a pre-polymerized catalyst component according to any of the preceding claims; and (B) an Al-alkyl compound.

## Patentansprüche

1. Vorpolymerisierte Katalysatorkomponente zur Polymerisation von Olefinen CH₂=CHR, wobei R Wasserstoff oder eine Ci- bis C₁₂-Kohlenwasserstoffgruppe ist, **dadurch gekennzeichnet, dass** sie eine nicht-stereospezifische feste Katalysatorkomponente umfasst, die Ti, Mg und ein Halogen umfasst, wobei die vorpolymerisierte Katalysatorkomponente eine Menge eines (Co)polymers eines Monomers CH₂=CHA ausgewählt aus Styrol, 4-Cl-Styrol, alpha-Methylstyrol und Divinylbenzol im Bereich von 0,1 bis zu 5 g pro g der festen Katalysatorkomponente enthält, wobei die nicht-stereospezifische feste Katalysatorkomponente unter den Standard-Propylenpolymerisationsbedingungen, die im Abschnitt "Allgemeine Vorgehensweise zur Standardpropylenpolymerisation" der Beschreibung beschrieben sind, ein Propylenhomopolymer mit einer Unlöslichkeit in Xylol bei 25 °C unter 55 % ergibt.

2. Vorpolymerisierte Katalysatorkomponente nach Anspruch 1, wobei die Menge des CH₂=CHA Polymers kleiner als 2 g pro g der festen Katalysatorkomponente ist.

3. Vorpolymerisierte Katalysatorkomponente nach Anspruch 2, wobei die Menge des CH₂=CHA Polymers 0,1 bis 0,9 g pro g der festen Katalysatorkomponente ist.

4. Vorpolymerisierte Katalysatorkomponente nach Anspruch 1, die eine Titanverbindung und ein Magnesiumdihalogenid umfasst.

5. Vorpolymerisierte Katalysatorkomponente nach Anspruch 1, wobei das Magnesiumdihalogenid Magnesiumdichlorid ist, und die Titanverbindung ausgewählt ist aus den Verbindungen mit der Formel Ti(OR)_{n-y}X_{y}, wobei R eine C₁- bis C₂₀-Kohlenwasserstoffgruppe ist, X Halogen ist, n die Wertigkeit von Titan ist, und y eine Zahl zwischen 1 und n ist.

6. Vorpolymerisierte Katalysatorkomponente nach einem der vorhergehenden Ansprüche, die keinen Elektronendonor enthält.

7. Katalysatorsystem zur Polymerisation von Olefinen, umfassend das Produkt, welches erhalten wird, indem (A) eine vorpolymerisierte Katalysatorkomponente gemäß einem der vorhergehenden Ansprüche; und (B) eine Al-Alkylverbindung in Kontakt gebracht werden.

8. Verfahren zur (Co)polymerisation von Ethylen, **dadurch gekennzeichnet, dass** sie in Gegenwart eines Katalysators durchgeführt wird, der (A) eine vorpolymerisierte Katalysatorkomponente gemäß einem der vorhergehenden Ansprüche; und (B) eine Al-Alkylverbindung umfasst.

## Revendications

1. Constituant catalytique prépolymérisé pour la polymérisation d'oléfines CH₂=CHR, R représentant hydrogène ou un groupe hydrocarboné en C₁-C₁₂, **caractérisé en ce qu'**il comprend un constituant catalytique solide non stéréospécifique, comprenant Ti, Mg et un halogène, ledit constituant catalytique prépolymérisé contenant une quantité d'un (co)polymère d'un monomère CH₂=CHA, choisi parmi le styrène, le 4-Cl-styrène, l'alpha-méthylstyrène et le divinylbenzène, de 0,1 à 5 g par g dudit constituant catalytique solide, ledit constituant catalytique solide non stéréospécifique donnant, dans les conditions de polymérisation standard de propylène décrites dans la section « procédure générale pour la polymérisation standard de propylène » de la description, un homopolymère de propylène possédant une insolubilité dans le xylène à 25°C inférieure à 55%.

2. Constituant catalytique prépolymérisé selon la revendication 1, dans lequel la quantité du polymère CH₂=CHA est inférieure à 2 g par g dudit constituant catalytique solide.

3. Constituant catalytique prépolymérisé selon la revendication 2, dans lequel la quantité du polymère CH₂=CHA est de 0,1 à 0,9 g par g de constituant catalytique solide.

4. Constituant catalytique prépolymérisé selon la revendication 1, comprenant un composé de titane et un dihalogénure de magnésium.

5. Constituant catalytique prépolymérisé selon la revendication 1, dans lequel le dihalogénure de magnésium est le dichlorure de magnésium et le composé de titane est choisi parmi les composés de formule Ti(OR)_{n-y}X_{y}, où R représente un groupe hydrocarboné en C₁-C₂₀ X représente halogène, n représente la valence de titane et y représente un nombre compris entre 1 et n.

6. Constituant catalytique prépolymérisé selon l'une quelconque des revendications précédentes, ne contenant pas de donneur d'électrons.

7. Système catalytique pour la polymérisation d'oléfines, comprenant le produit obtenu par mise en contact (A) d'un constituant catalytique prépolymérisé selon l'une quelconque des revendications précédentes ; et (B) d'un composé Al-alkyle.

8. Procédé de (co)polymérisation d'éthylène, **caractérisé en ce qu'**il est mis en œuvre en présence d'un catalyseur comprenant (A) un constituant catalytique prépolymérisé selon l'une quelconque des revendications précédentes ; et (B) un composé Al-alkyle.
